# EUROPEAN PATENT SPECIFICATION

(11) **EP 3 834 598 B1**
(45) Date of publication and mention of the grant of the patent: **27.11.2024**
(21) Application number: 20212629.8
(22) Date of filing: 09.12.2020
(51) Int. Cl.: A01D 34/00

(54) **GROUP FOR ADJUSTING THE HEIGHT OF THE CUTTING BLADE FOR A ROBOT LAWNMOWER**
REGULIERUNGSVORRICHTUNG DER HÖHE DER SCHNEIDKLINGEN FÜR RASENMÄHERROBOTER
DISPOSITIF DE RÉGLAGE DE LA HAUTEUR DE LAME DE COUPE POUR TONDEUSE À GAZON ROBOTISÉE

(30) Priority: 10.12.2019 IT 201900023511
(43) Date of publication of application: 16.06.2021
(73) Proprietor: Stiga S.p.A. in breve anche St. S.p.A., 31033 Castelfranco Veneto (TV) (IT)
(72) Inventor: FOSCARO, Carlo, 31050 Casacorba di Vedelago (IT); SCAPIN, Michele, 36061 Bassano del Grappa (IT); COMIN, Andrea, 31051 Follina (IT); ROBINSON, Sean, 31033 Castelfranco Veneto (IT)
(74) Representative: Mittler, Andrea

(56) References cited:
- EP-A1- 0 628 239
- EP-A1- 3 210 459
- WO-A1-00/26531
- WO-A1-2014/007696
- CN-U- 201 830 660

## Description

The present invention relates to a robot lawnmower with a group for adjusting the height of the cutting blade of the robot lawnmower.

Autonomous lawnmowers, also called robot lawnmowers, which allow keeping a constant height of a turf with very limited efforts by the user are increasingly common: the robot lawnmower moves and cuts the grass in an autonomous manner.

Robot lawnmowers now have a limited volume, a satisfactory autonomy and affordable costs also for private users.

The group of users has therefore significantly expanded.

One of the essential features of any lawnmower, i.e. not only robot lawnmowers, is to allow the adjustment of the height of the cutting blade to operate on various grounds, thus obtaining turf with different height according to the needs and/or tastes of the user.

Said essential feature in the robot lawnmowers is to be combined with the need to have a machine with a limited volume, which is lightweight and possibly has an even lower cost to further increase the group of users.

US-10080326 describes a robot lawnmower with a group for adjusting the height of the cutting blade of motorized type. A generic engine in said group controls a screw-nut screw gear able to modify the height of the cutting blade. The motor and the gear are housed in a frame inside of which the motor able to control the cutting blade, vertically translates.

A group for adjusting the height of the cutting blade for a robot lawnmower of the motorized type with a gear is also described in US-2018/0329420.

Disadvantageously, said motorized types of groups are complex to assemble, cumbersome and difficult to keep performing: accordingly, the purchase and maintenance cost of the robot lawnmower increases.

Robot lawnmowers with groups for adjusting the height of the cutting blade of manual type are also known. The space occupied is limited, the cost is less but obviously there is no adjustment automation.

The robot lawnmowers with manual and motorized adjustment group require a different design because as mentioned, said volume of the mechanisms is different, in particular the motorized adjustment groups require larger containing frames and especially with particular distribution of the spaces according to the mechanical and control components to be inserted.

WO-2014/007696 describes a group for adjusting the height of a cutting blade for a robot lawnmower, comprising a base, a motor housing able to house a motor for controlling the cutting blade, a transmission screw and a closing frame. The group further comprises switching means able to switch the group between a motorized configuration in which the motor housing automatically slides, and a manual configuration in which the motor housing manually slides.

It is the object of the present invention to make a robot lawnmower with a group for adjusting the cutting height of the robot lawnmower which can be switched from manual to motorized.

It is a further object of the present invention that the structure of said group does not change following said switching, which is performed with a simple replacement of certain components.

It is a still further object that said adjustment group allows significant economies of scale to be obtained in producing robot lawnmowers.

According to the invention, said and further objects are achieved by a robot lawnmower as defined in claim 1.

Advantageously, the group may be switched between a motorized and a manual configuration while exploiting the same frame.

The group is compact, formed by standard elements which are easy to put together, with a volume which substantially does not change.

The switching is simple because it involves easy assembly/disassembly without risks for the user.

These and other features of the present invention will become more apparent from the following detailed description of a practical exemplary embodiment thereof, shown by way of non-limiting example in the accompanying drawings, in which:
Figure 1 shows a perspective view of an adjustment group not comprised in the present invention, in motorized configuration;
Figure 2 shows a top plan view of the adjustment group in Figure 1;
Figure 3 shows a side view of the adjustment group in Figure 1;
Figure 4 shows a sectional view according to line IV-IV in Figure 2;
Figure 5 shows a sectional view according to line V-V in Figure 3;
Figure 6 shows a sectional view according to line VI-VI in Figure 3;
Figure 7 shows a perspective view of an adjustment group not comprised in the present invention, in manual configuration;
Figure 8 shows a top plan view of the adjustment group in Figure 7;
Figure 9 shows a side view of the adjustment group in Figure 7;
Figure 10 shows a sectional view according to line X-X in Figure 8;
Figure 11 shows a sectional view according to line XI-XI in Figure 9;
Figure 12 shows a sectional view according to line XII-XII in Figure 9;
Figure 13 shows an exploded perspective view of the adjustment group in Figure 1;
Figure 14 shows an exploded perspective view of the adjustment group in Figure 7;
Figure 15 shows a perspective view of an adjustment group according to the present invention, in motorized configuration;
Figure 16 shows a top plan view of the adjustment group in Figure 15;
Figure 17 shows a front view of the adjustment group in Figure 15;
Figure 18 shows a sectional view according to line XVIII-XVIII in Figure 17;
Figure 19 shows an exploded perspective view of the adjustment group in Figure 15;
Figure 20 shows a perspective view of an adjustment group according to the present invention, in manual configuration;
Figure 21 shows a top plan view of the adjustment group in Figure 20;
Figure 22 shows a front view of the adjustment group in Figure 20;
Figure 23 shows a sectional view according to line XXIII-XXIII in Figure 22;
Figure 24 shows an exploded perspective view of the adjustment group in Figure 20.

A group 1 for adjusting the height of a cutting blade for a robot lawnmower comprises a base 2, a motor housing 3 able to house a motor 4 for controlling the cutting blade and closed by a cover 5, and a closing frame 6.

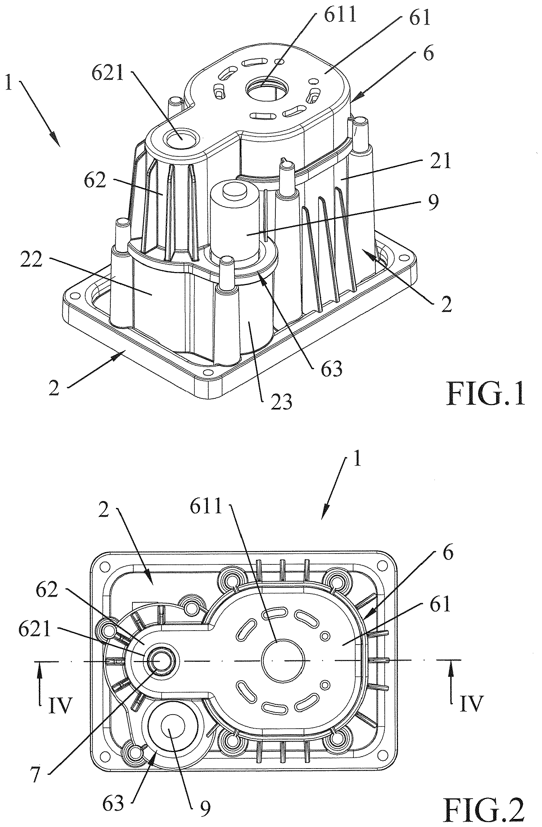

Base 2 comprises a first housing 21, a second housing 22 and a third housing 23 (Figures 1 to 14), in a single piece.

The first housing 21 is able to slidingly contain the motor housing 3. The sliding occurs in the direction useful for adjusting the height of the cutting blade, as will become more apparent below.

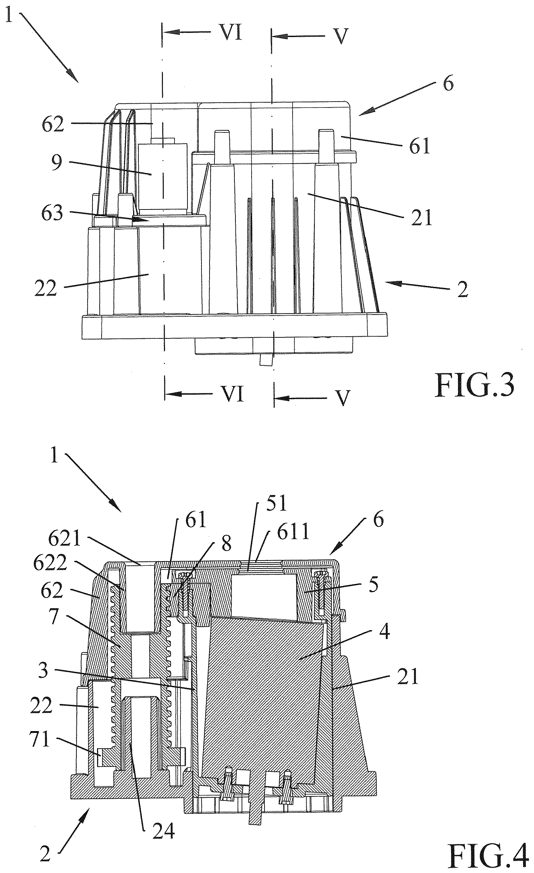

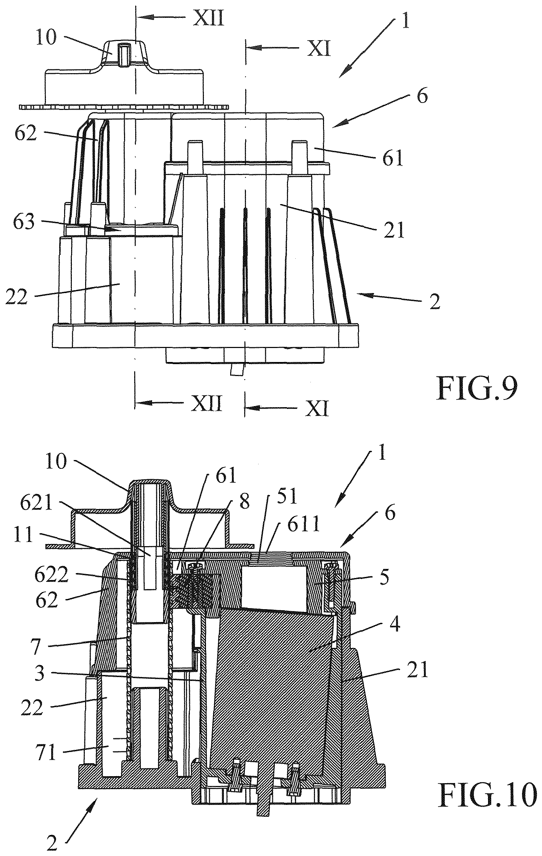

The second housing 22 is able to contain a vertical axis transmission screw 7 able to mesh with a connection element 8 fixed to a side of the motor housing 3 (Figures 4 and 10).

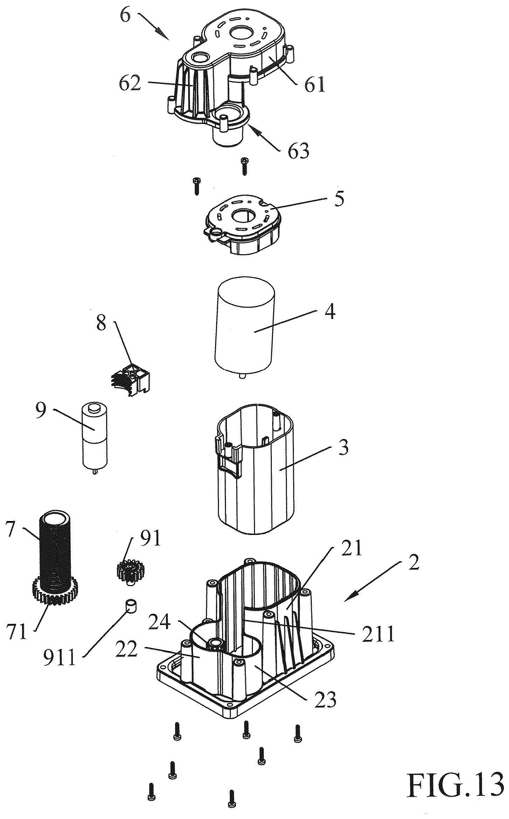

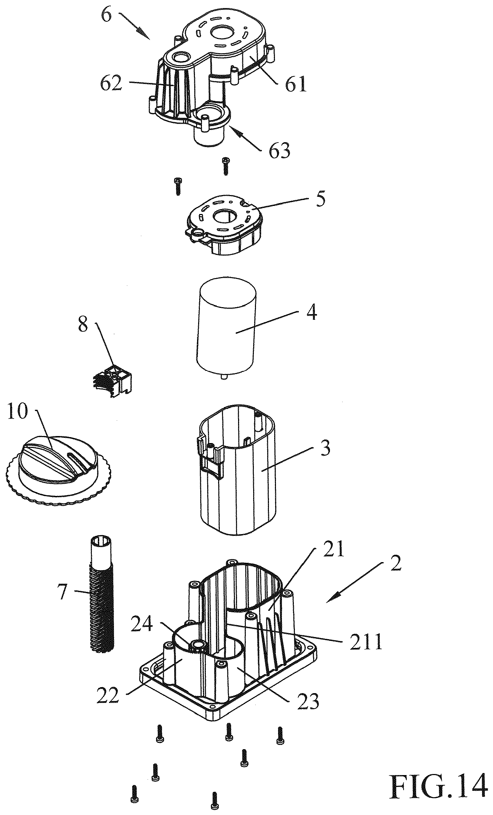

The housings 21-23 are separate but communicating by virtue of side openings: the first housing 21 communicates at least with the second housing 22 which communicates at least with the third housing 23 (figures 13 and 14).

The transmission screw 7 is rotatably mounted on a pivot 24 of base 2 so as to be partially contained in the second housing 22.

Said pivot 24 is contained in the second housing 22.

With respect to base 2 fixed to the load-bearing frame of the robot lawnmower, the transmission screw 7 may only rotate about the rotation axis thereof on the outer surface of pivot 24 with which it is coaxial. The transmission screw 7 does not translate in any direction.

The head of the transmission screw 7 protrudes from the second housing 22.

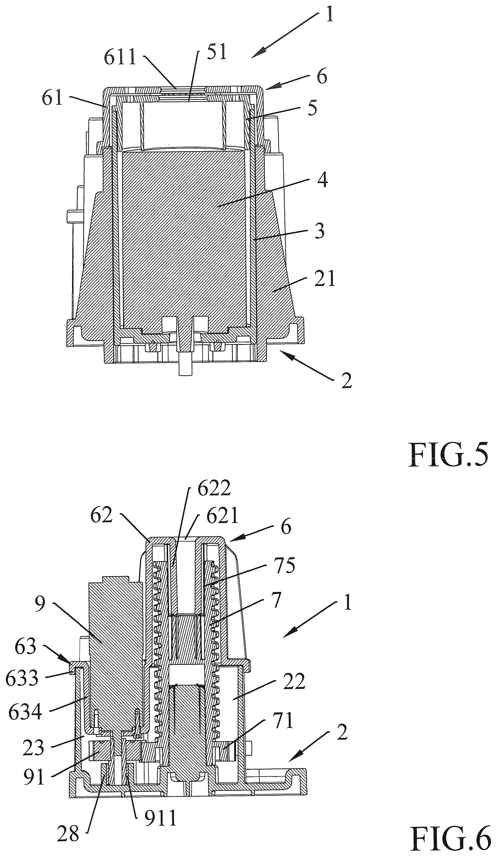

The third housing 23 is able to at least partially contain a motor 9 for adjusting the height of the cutting blade (Figure 6).

Said motor 9 is able to rotate a crown gear 91, contained in the third housing 23, which is able mesh with a crown gear 71 in one piece with the transmission screw 7 and with the same rotation axis (Figures 6 and 13). The crown gear 91 is associated with a seat 28 on the bottom of the third housing 23 of base 2 by a bushing 911.

The first housing 21 has a side split 211 which allows the connection element 8 to remain coupled to the transmission screw 7 during the height adjustment of the blade.

The closing frame 6 is a single piece and comprises a first cover 61 able to be mounted on the head of the first housing 21 and a second cover 62 able to be mounted on the head of the second housing 22 so as to contain the head of the transmission screw 7 protruding from the second housing 22.

An attachment 63 able to be mounted on the head of the third housing 23 is provided beside the second cover 62.

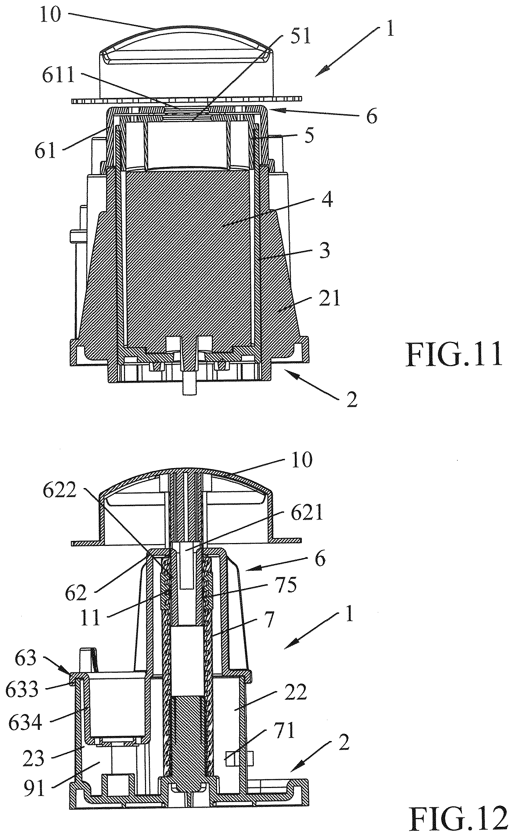

The attachment 63 provides an edge 633 able to rest on an upper edge of the third housing 23, and a cylindrical element 634 able to be inserted in the third housing 23 flush with the inner side edge of the third housing 23 (Figures 6 and 12).

The cylindrical element 634 partially houses motor 9 which protrudes from the attachment 63, remaining partially uncovered for a better ventilation.

The cylindrical element 634 is shorter with respect to the depth of the third housing 23 so as to allow the crown gears 71, 91 to mesh.

The base of the cylindrical element 634 provides a through hole for a motor pivot of motor 9 able to drive the crown gear 91 (Figure 6).

The second cover 62 provides an upper opening 621 in axis with the transmission screw 7, the utility of which will be more apparent below.

Also, the first cover 61 provides an upper opening 611 which once the mounting is complete, is above an opening 51 of cover 5.

The second cover 62, at the upper opening 621, has a tubular portion 622 which protrudes downwards and is able to couple with an upper cavity 75 of the transmission screw 7 (Figure 6).

The operation of group 1 is very simple.

The actuation of motor 9 causes the rotation of the transmission screw 7, which raises or lowers the motor housing 3 according to the rotation direction.

The transmission screw 7 may only rotate with respect to base 2, while the motor housing 3 is able to translate along an axis parallel to the rotation axis of the transmission screw 7, thus modifying the height of the cutting blade.

Motor 9 is stopped once the desired height is reached.

The configuration of the embodiment shown in Figures 1-6, 13 is of the electronic motorized automatic control type.

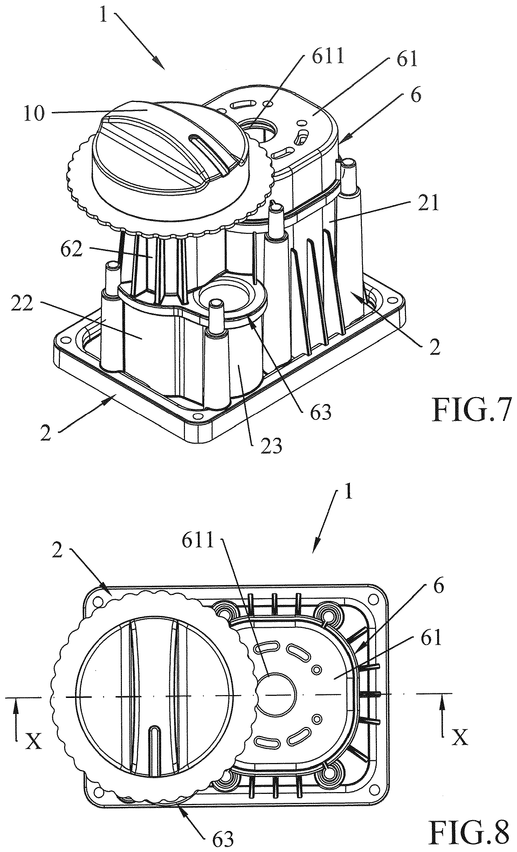

Figures 7-12, 14 instead describe a group 1 of the first embodiment in manual configuration, in which motor 9 and the crown gears 71, 91 are missing, and in which the transmission screw 7 is manually controlled by a knob 10. The other elements forming group 1 have not changed, in particular base 2, the closing cover 6, the motor housing 3 and motor 4.

The knob 10 is connected to the transmission screw 7 by a connection 11 which crosses the upper opening 621 (Figure 10). The knob 10 is outside the closing frame 6, above it.

It is sufficient to rotate the knob 10 to raise or lower the motor housing 3 in this manual type of configuration.

Advantageously, group 1 may be switched between a motorized configuration and a manual configuration by simply adding or removing control elements without modifying the casing of group 1, i.e. base 2 and the closing cover 6.

Therefore the group 1 is compact, formed by essential standard elements which are easy to put together, with a volume which substantially does not change.

The motor 4 and the drive means 7, 71, 91 are well covered but in any case ventilated.

The triple housing 21-23 allows an easy access to components performing various functions: the closing frame 6 is secured to base 2 by simple screws.

Maintenance is simplified and quick.

The shape of the closing frame 6 is substantially complementary to the base 2 so as to essentially have only two components defining the containing space of all the control elements, according to both embodiments.

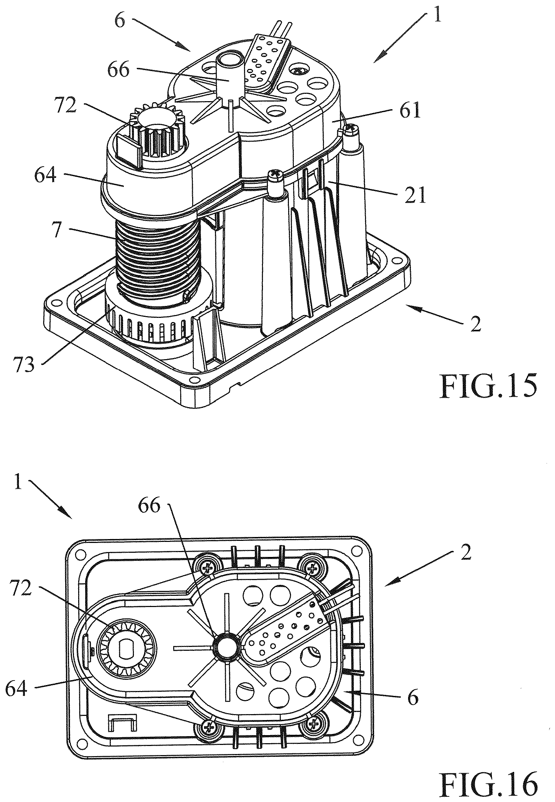

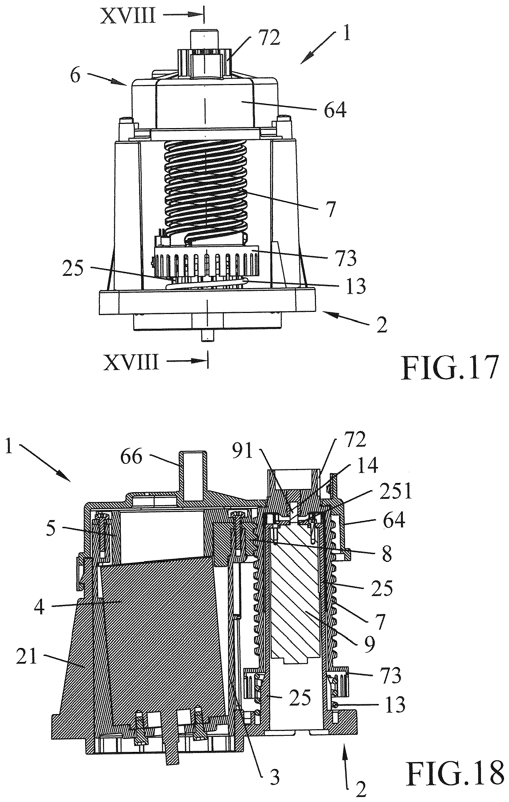

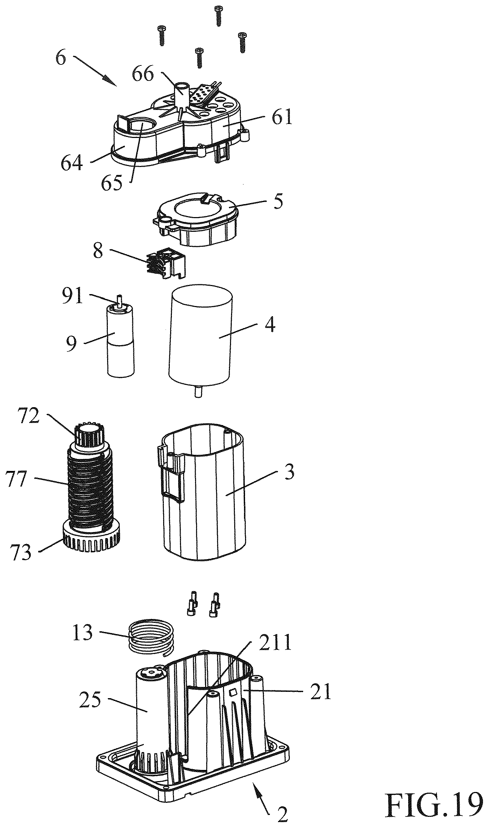

Figures 15-24 describe an embodiment of group 1 according to the present invention, showing the following differences with respect to the first embodiment:
- the base 2 does not provide the housings 22, 23: the screw 7 is hollow and rotatably mounted on a pivot 25, preferably a conical pivot, of the base 2 (Figures 18, 19, 23 and 24); similarly to the first embodiment, the inner surface of the screw 7 is able to slide over the outer surface of the pivot 25 with which it is coaxial;
- the screw 7 comprises a crown gear 72 at the head, and a base 73 able to interact with a spring 13 mounted on the pivot 25 before the screw 7;
- the closing frame 6 only provides the first cover 61 and a portion 64 with a through hole 65; said portion 64 is mounted on the head of the screw 7, causing the crown gear 72 to pass through the through hole 65 so as to protrude upwards so as to allow the coupling with the knob 10; the portion 64 allows the screw 7 to be axially blocked, therefore it may only rotate; the portion 64 counters the thrust of the spring 13, ensuring the absence of axial clearances.

In the embodiment in Figures 15-24, the switching between the manual and motorized configuration is even simpler, with an even more limited overall volume because when needed, the motor 9 is mounted into pivot 25, i.e. in the cavity of the screw 7 instead of beside it.

The motor 9 is fixed to the pivot 25 and rotates the screw 7 from the inside by an attachment 14 (Figure 18): in the motorized configuration, the screw 7 rotates, controlling the ascent or descent of the motor housing 3, as in the group 1 shown in Figure 13 but according to a different embodiment.

The inner cavity of the pivot 25 is open at the bottom so as to allow the motor 9 to enter, preferably fixing it to the top of the pivot 25 where there is a hole 251 which is useful for the passage of the rotating shaft 91 of the motor 9, which is coupled with the attachment 14 to allow the rotation of screw 7.

The pivot 25 partially has the same function as the pivot 24 of the first embodiment because it forms a support for the rotation of screw 7 with which it is coaxial, but given that it is longer and open at the bottom, it additionally allows the housing of the motor 9.

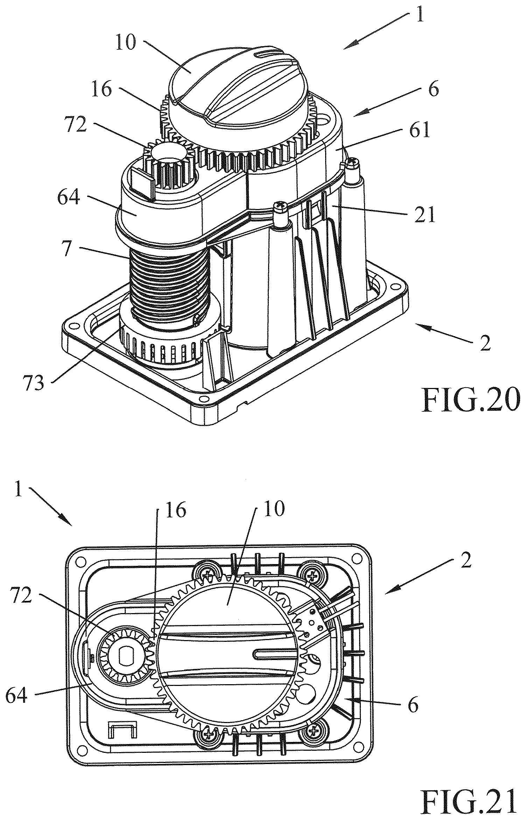

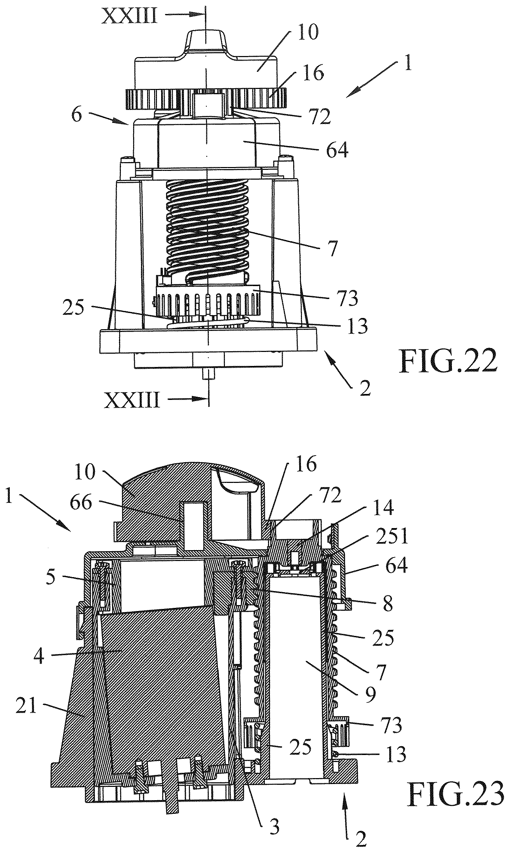

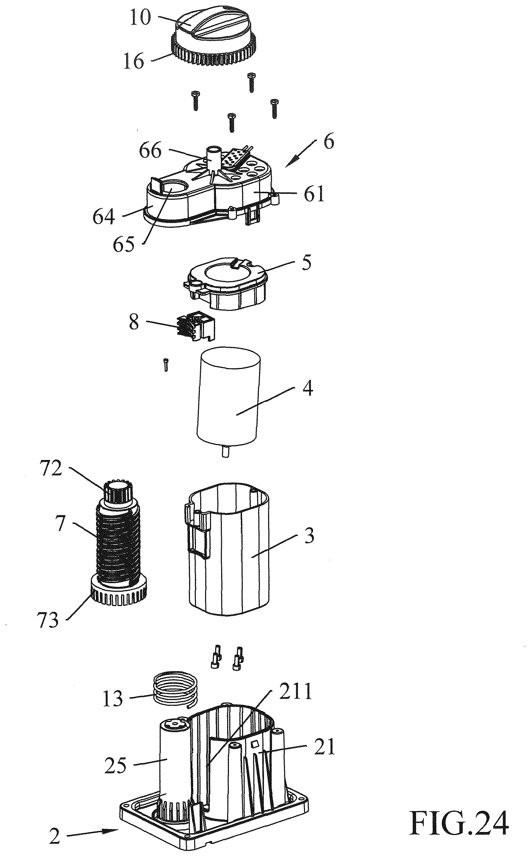

If the user selects a manual configuration, the motor 9 is mounted and the knob 10 is rotatably associated with a pivot 66 of the closing frame 6 (Figures 23 and 24). The knob 10 comprises a crown gear 16 able to mesh with the crown gear 72 of the screw 7 (Figures 20 and 21).

Advantageously, the group 1 may be switched between a motorized and a manual configuration while exploiting the same frame.

The embodiment in Figures 1-14 results in an easier assembly of the motor, while the embodiment in Figures 15-24 allows a space saving and increased protection of the motor 9 which is wholly contained in the cavity of the pivot 25, in turn contained in the cavity of the screw 7.

## Claims

1. Robot lawnmower comprising a group (1) for adjusting the height of a cutting blade of the robot lawnmower, wherein the group (1) comprises a base (2), a motor housing (3) able to house a motor (4) for controlling the cutting blade, a transmission screw (7) and a closing frame (6), wherein
the transmission screw (7) is able to mesh with a connection element (8) fixed to a side of the motor housing (3), and
the rotation axis of the transmission screw (7) is parallel to the sliding axis of the motor housing (3),
wherein the group (1) further comprises
switching means (9, 10, 25) able to switch the group (1) between a motorized configuration wherein the motor housing (3) automatically slides, and a manual configuration wherein the motor housing (3) manually slides,
wherein the transmission screw (7) is rotatably mounted on a pivot (25) of the base (2),
wherein the base (2) comprises a housing (21) for the motor housing (3), said housing (21) provides a side split (211) which allows the connection element (8) to remain coupled to the transmission screw (7) during the height adjustment of the cutting blade,
wherein the pivot (25) comprises a cavity able to house a motor (9) able to drive the transmission screw (7),
**characterized in that** the transmission screw (7) comprises a crown gear (72) at the head, and a base (73) able to interact with a spring (13) mounted on the pivot (25) before the transmission screw (7),
wherein the closing frame (6) has a cover (61) able to be mounted on the head of the housing (21) of the motor housing (3), and a portion (64) with a through hole (65), wherein the portion (64) is able to be mounted on the head of the transmission screw (7) by passing the crown gear (72) through the through hole (65) so that it protrudes upwards with respect to said portion (64).

2. Robot lawnmower according to claim 1, **characterized in that** the group (1) comprises a knob (10) rotatably mounted on a pivot (66) of the closing frame (6), wherein the knob (10) comprises a crown gear (16) able to mesh with the crown gear (72) of the transmission screw (7).

## Patentansprüche

1. Mähroboter mit einer Gruppe (1) zum Einstellen der Höhe eines Schneidmessers des Mähroboters, wobei die Gruppe (1) eine Basis (2), ein Motorgehäuse (3), das einen Motor (4) zum Steuern des Schneidmessers aufnehmen kann, eine Übertragungsschraube (7) und einen Verschlussrahmen (6) aufweist,
wobei die Übertragungsschraube (7) mit einem an einer Seite des Motorgehäuses (3) befestigten Verbindungselement (8) kämmen kann und die Rotationsachse der Übertragungsschraube (7) parallel zu der Verschiebeachse des Motorgehäuses (3) ist,
wobei die Gruppe (1) ferner eine Umschalteinrichtung (9, 10, 25) aufweist, die die Gruppe (1) zwischen einer motorisierten Konfiguration, in der das Motorgehäuse (3) automatisch gleitend verschoben wird, und einer manuellen Konfiguration, in der das Motorgehäuse (3) manuell gleitend verschoben wird, umschalten kann,
wobei die Übertragungsschraube (7) auf einem Drehzapfen (25) der Basis (2) rotationsbeweglich angebracht ist,
wobei die Basis (2) ein Gehäuse (21) für das Motorgehäuse (3) aufweist, wobei das Gehäuse (21) eine seitliche Teilung (211) besitzt, die es dem Verbindungselement (8) ermöglicht, während der Höheneinstellung des Schneidmessers mit der Übertragungsschraube (7) gekoppelt zu bleiben,
wobei der Drehzapfen (25) einen Hohlraum aufweist, der einen Motor (9) aufnehmen kann, der zum Antreiben der Übertragungsschraube (7) ausgebildet ist,
**dadurch gekennzeichnet, dass** die Übertragungsschraube (7) ein Kronenrad (72) am Kopf sowie eine Basis (73) aufweist, die mit einer Feder (13) zusammenwirken kann, die vor der Übertragungsschraube (7) auf dem Drehzapfen (25) montiert ist,
wobei der Verschlussrahmen (6) eine Abdeckung (61) aufweist, die am Kopf des Gehäuses (21) des Motorgehäuses (3) montiert werden kann, und einen Bereich (64) mit einer Durchgangsöffnung (65) aufweist, wobei der Bereich (64) am Kopf der Übertragungsschraube (7) montiert werden kann, indem das Kronenrad (72) durch die Durchgangsöffnung (65) geführt wird, so dass es in Bezug auf den Bereich (64) nach oben hervorsteht.

2. Mähroboter nach Anspruch 1,
**dadurch gekennzeichnet, dass** die Gruppe (1) einen Knopf (10) aufweist, der auf einem Drehzapfen (66) des Schließrahmens (6) drehbar montiert ist, wobei der Knopf (10) ein Kronenrad (16) aufweist, das in der Lage ist, mit dem Kronenrad (72) der Übertragungsschraube (7) zu kämmen.

## Revendications

1. Tondeuse à gazon robotisée comprenant un groupe (1) pour régler la hauteur d'une lame de coupe de la tondeuse à gazon robotisée, dans laquelle le groupe (1) comprend une base (2), un logement de moteur (3) pouvant loger un moteur (4) pour commander la lame de coupe, une vis de transmission (7) et un châssis de fermeture (6), dans laquelle :
la vis de transmission (7) peut s'engrener avec un élément de raccordement (8) fixé à un côté du logement de moteur (3), et
l'axe de rotation de la vis de transmission (7) est parallèle à l'axe de coulissement du logement de moteur (3),
dans laquelle le groupe (1) comprend en outre :
des moyens de commutation (9, 10, 25) pouvant commuter le groupe (1) entre une configuration motorisée dans laquelle le logement de moteur (3) coulisse automatiquement et une configuration manuelle dans laquelle le logement de moteur (3) coulisse manuellement,
dans laquelle la vis de transmission (7) est montée, de manière rotative, sur un pivot (25) de la base (2),
dans laquelle la base (2) comprend un logement (21) pour le logement de moteur (3), ledit logement (21) fournit une fente latérale (211) qui permet à l'élément de raccordement (8) de rester couplé à la vis de transmission (7) pendant le réglage de la hauteur de la lame de coupe,
dans laquelle le pivot (25) comprend une cavité pouvant loger un moteur (9) pouvant entraîner la vis de transmission (7),
**caractérisée en ce que** la vis de transmission (7) comprend une couronne dentée (72) au niveau de la tête, et une base (73) pouvant interagir avec un ressort (13) monté sur le pivot (25) avant la vis de transmission (7),
dans laquelle le châssis de fermeture (6) a un couvercle (61) pouvant être monté sur la tête du logement (21) du logement de moteur (3), et une partie (64) avec un trou débouchant (65), dans laquelle la partie (64) peut être montée sur la tête de la vis de transmission (7) en faisant passer la couronne dentée (72) par le trou débouchant (65) de sorte qu'elle fasse saillie vers le haut par rapport à ladite partie (64).

2. Tondeuse à gazon robotisée selon la revendication 1, **caractérisée en ce que** le groupe (1) comprend un bouton (10) monté de manière rotative sur un pivot (66) du châssis de fermeture (6), dans laquelle le bouton (10) comprend une couronne dentée (16) appropriée pour s'engrener avec la couronne dentée (72) de la vis de transmission (7).
